# EUROPÄISCHE PATENTSCHRIFT

(11) **EP 1 767 327 B1**
(45) Veröffentlichungstag und Bekanntmachung des Hinweises auf die Patenterteilung: **19.06.2013**
(21) Anmeldenummer: 06075680.6
(22) Anmeldetag: 22.03.2006
(51) Int. Cl.: B29C 44/12, B29C 44/14

(54) **Verfahren zur Herstellung eines Innenverkleidungsteils mit einer zweiteiligen Haut und Innenverkleidungsteil hergestellt nach dem Verfahren**
Method of manufacturing an interior trim panel with a two piece skin and trim panel manufactured according to the method
Procédé de fabrication d'un revêtement intérieur avec une peau en deux parties et revêtement fabriqué selon ce procédé

(30) Priorität: 22.03.2006 DE 102005014085; 26.09.2005 FR 0509825
(43) Veröffentlichungstag der Anmeldung: 28.03.2007
(73) Patentinhaber: Faurecia Innenraum Systeme GmbH, 76767 Hagenbach (DE)
(72) Erfinder: Heinz, Claus, 76764 Rheinzabern (DE); Baumann, Bernhard, 67363 Lustadt (DE); Meyer, Andreas, 76770 Hatzenbühl (DE); Neuhard, Thomas, 76891 Rumbach (DE); Baumont, Sébastien, 95310 Saint Quen l'Aumone (FR); Beau, Godefroy, 92250 La Garenne Colombes (FR); Gehring, Andreas, 76133 Karlsruhe (DE); Stoof, Freddy, 68180 Hornbourg-Wihr-en Pleine (FR)
(74) Vertreter: Pfenning, Meinig & Partner GbR

(56) Entgegenhaltungen:
- EP-A- 0 538 992
- DE-A1- 19 752 058
- DE-C1- 19 535 594
- US-A- 4 572 856
- US-A1- 2004 224 131
- PATENT ABSTRACTS OF JAPAN Bd. 014, Nr. 357 (M-1005), 2. August 1990 (1990-08-02) & JP 02 127010 A (KANTO SEIKI CO LTD), 15. Mai 1990 (1990-05-15)
- PATENT ABSTRACTS OF JAPAN Bd. 2002, Nr. 06, 4. Juni 2002 (2002-06-04) -& JP 2002 052548 A (INOAC CORP), 19. Februar 2002 (2002-02-19)
- PATENT ABSTRACTS OF JAPAN Bd. 017, Nr. 088 (M-1370), 22. Februar 1993 (1993-02-22) -& JP 04 284209 A (INOAC CORP), 8. Oktober 1992 (1992-10-08)

## Beschreibung

Die Erfindung betrifft ein Verfahren zur Herstellung von Bauteilen, insbesondere Innenverkleidungsteilen, sowie Bauteile, welche durch Anwendung des Verfahrens erhalten werden.

Die Verwendung, beispielsweise als Innenverkleidungsteil eines Automobils, von Bauteilen mit einer Haut, welche durch einen starren Träger mit einer Zwischenschicht aus Schaum getragen wird, ist bekannt. Außerdem sind solche Innenverkleidungsteile bekannt, bei welchen die Haut mit unterschiedlichen Charakteristiken ausgebildet ist. Beispielsweise enthält die Instrumententafel eines Automobils manchmal in ihrem oberen Bereich eine Verkleidung, welche durch eine Haut mit einer ersten Farbe gebildet wird, und ihrem unteren Bereich eine Verkleidung, welche durch eine Haut mit einer anderen Farbe gebildet wird: Die Haut wird vor der Herstellung des Verkleidungsteils in zwei Farben hergestellt, sei es durch Verschweißen, sei es durch Bemalen, sei es durch ein zweifarbiges Rotationssinterverfahren. Allerdings ist es manchmal unmöglich mittels Rotationssinterverfahren mit angemessenen Kosten die von den Designern gewünschten Trennlinien der Farbbereiche umzusetzen, zum einen aufgrund der Komplexität der Masken der Sinterform und zum anderen aufgrund der Anzahl der notwendigen Werkzeuge.

Die Herstellung von Innenverkleidungsteilen mit einer einteiligen Haut stellt schon an sich eine Herausforderung bezüglich der Dichtheit im Verbindungsbereich der Haut und des starren Teils des Trägers dar, gegen welchen sich die Haut während der Beaufschlagung einer Mischung, welche einen Schaum (als Schicht) zwischen Haut und Träger ausbilden soll, anlegt (unter dem Begriff "Beaufschlagung" ist in diesem technischen Zusammenhang in dieser Anmeldung auch der Prozess der Schaumausbildung zu verstehen). Ein derartiges Dichtproblem tritt noch deutlicher hervor, wenn zwei weiche Hautteile überlagert werden: Die Mischung, welche die Schaumschicht bilden soll, kann einfach zwischen die beiden Hautteile eindringen und letzten Endes austreten, und damit im von außen sichtbaren Bereich der Trennlinie der Hautteile einen Mangel oder zumindest eine Beeinträchtigung im Erscheinungsbild der Bauteiloberfläche erzeugen.

Trotz der Schwierigkeiten bezüglich der Dichtheit besteht der Wunsch, derartige Innenverkleidungsteile mit Häuten aus zwei oder mehr Teilen herzustellen.

Im Hinblick darauf könnte man erwägen, die beiden Teile der Haut vor der Herstellung des Innenverkleidungsteils miteinander zu verkleben. Dies bringt aber dann andere Probleme mit sich: Positionierung der Verbindung, Austreten des Klebers, etc.

Eine andere Lösung, welche in der Druckschrift JP-2002052548 beschrieben ist, betrifft ein Verfahren, nach welchem die überlappenden Endbereiche zweier Teile einer Haut lokal, d.h., abschnittsweise, durch die die Enden von Rippen, welche aus einem starren Träger hervorstehen, gehalten werden. Auf Höhe der Rippen werden die Endbereiche der zwei überlappenden Bauteile ausreichend an die Form angedrückt.

Nachteil dieses Verfahren ist, dass zwischen zwei Rippen sich die Endbereiche auseinanderspreizen und den Durchtritt von sich bildendem Schaum und somit die Ausbildung von optischen Mängeln erlauben können.

Die JP-A-02127010 offenbart ein Verfahren zum Herstellen eines Formteils, das einen Träger und eine Haut aufweist, zwischen denen eine Schaumzwischenlage angeordnet ist. Die Haut besteht aus aneinander angrenzenden Teilen, deren einander zugewandte Endbereiche eine ununterbrochene Überlappung bilden. Zur Herstellung des Formteils werden die überlappenden Hautteile in eine erste Formhälfte und der Träger in eine zweite Formhälfte eingelegt und die Form dann geschlossen. Anschließend wird eine flüssige Mischung eingeführt, die sich zur Schaumzwischenlage entwickelt. Bevor sich diese ausgebildet hat, werden die überlappenden Endbereiche in ununterbrochenem gegenseitigem Kontakt gehalten.

Schließlich beschreibt die US-A-4 572 856 die Herstellung eines Formteils, wie eines Armaturenbretts eines Kraftfahrzeugs, mit zwei starren Außenschichten und einer Schaumzwischenlage. Die Außenschichten werden jeweils in eine Formhälfte eingelegt. Zusätzlich werden Versteifungsteile zwischen gegenüberliegenden Flächen der Außenschichten angeordnet. Die Versteifungsteile bestehen aus einem harten Kern, beispielsweise aus Holz, und einer diesen umgebenden offenzelligen Schaumstoffschicht. Nach dem Schließen der Form wird Polyurethanschaum eingefüllt, der auch durch die offenzellige Schaumstoffschicht hindurchtreten und diese imprägnieren kann, so dass nach dem Aushärten des Polyurethanschaums die Versteifungsteile innerhalb des Formteils fixiert sind.

Aufgabe vorliegender Erfindung ist es somit, ein Verfahren anzugeben, das die kostengünstige Herstellung eines Bauteils mit einer mangelfreien durch eine mehrteilige Haut gebildeten Oberfläche ermöglicht, sowie ein Bauteil, insbesondere ein Innenverkleidungsteil, mit einer derartigen Oberfläche zu schaffen.

Diese Aufgabe wird erfindungsgemäß durch ein Verfahren mit den Merkmalen des Anspruchs 1 und ein Bauteil mit den Merkmalen des Anspruchs 8 gelöst. Vorteilhafte Weiterbildungen ergeben sich mit den Merkmalen der Unteransprüche

Die Aufgabe wird dadurch gelöst, dass die Endbereiche praktisch über ihre ganze Länge in gegenseitigen Kontakt gehalten werden. Dieses Halten wird durch Anordnen eines Elements mit offenen Zellen oder Poren, die den Durchtritt des eingebrachten Schaums ermöglichen, welches sich über die ganze Länge der Endbereiche erstreckt, ermöglicht.

Die Erfindung betrifft ein Verfahren zur Herstellung eines Innenverkleidungsteils für Automobile gemäß dem Oberbegriff des Anspruchs 1. DE-A-3507522 offenbart ein solches Verfahren.

Das Halten der Endbereiche im durchgehenden Kontakt umfasst drei verschiedenen Ausführungsformen gemäß den kennzeichnenden Teilen des Anspruchs 1.

Vorzugsweise wird das Element ausschließlich im Bereich der Endbereiche angeordnet. Damit kann ein nachteiliger Einfluss auf Schaumfluss und Haptik vermieden werden.

Vorzugsweise ist die Dichtung eine Dichtlippe, welche entlang des Randes des Endbereichs des innen liegenden Teils verläuft.

Vorzugsweise enthält das Halten der Endbereiche in einem praktisch durchgängigen Kontakt das Aufblasen eines Schlauches gegen den außen liegenden Endbereich der Haut an den Träger der Haut in der ersten Werkzeughälfte.

In der zweiten Ausführungsform wird durch Anlegen von Unterdruck an durchgehende Öffnungen des außen liegenden Endbereichs in seinem Bereich, der dem innen liegenden Endbereich gegenüberliegt, der innen liegende Endbereich und der außen liegende Endbereich gemeinsam gegen die Oberfläche der ersten Werkzeughälfte gepresst.

Dies ist dann vorteilhaft, wenn die Dichtung zwischen den beiden sich überlappenden Endbereichen zusätzlich verstärkt werden soll.

Vorzugsweise enthält das Verfahren die Verwendung von Hautteilen mit unterschiedlichen Eigenschaften. Diese unterschiedlichen Eigenschaften betreffen vorteilhafterweise die Farbe, die Dicke, die Steifigkeit, die Textur, die Natur des Materials und die Körnigkeit bzw. Rauigkeit.

Die Erfindung betrifft des Weiteren ein Bauteil gemäß Anspruch 8, insbesondere Innenverkleidungsteil für ein Automobil, das eine Haut, die von einem starren Träger über eine Zwischenlage aus Schaum getragen wird, enthält, wobei die Haut zumindest zwei Teile aufweist, die über eine durchgehende Überlappung ihrer Endbereiche miteinander verbunden sind. Das Bauteil weist zwischen dem inneren der sich überlappenden Endbereiche der Hautteile und dem Träger ein Element mit offener Porosität, welches in seinen Poren Schaum der Zwischenlage enthält, auf.

Vorzugsweise ist das Element ausschließlich zwischenen sich überlappenden Hautteilen und dem Träger angeordnet.

Das Element mit offener Porosität besteht bevorzugt aus einem Schaum, aus einem Gewebe, einem Gewirke oder einem Vlies.

Die Erfindung wird nun anhand von Ausführungsbeispielen mit Bezug auf mehrere Figuren näher erläutert, wobei:
eine erste Ausführungsform des erfindungsgemäßen Verfahrens darstellt,

- die Figur 2: eine zweite Ausführungsform des erfindungsgemäßen Verfahrens darstellt, und
- die Figuren 3 und 4: zwei Varianten einer weiteren Ausführungsform des erfindungsgemäßen Verfahrens darstellen.

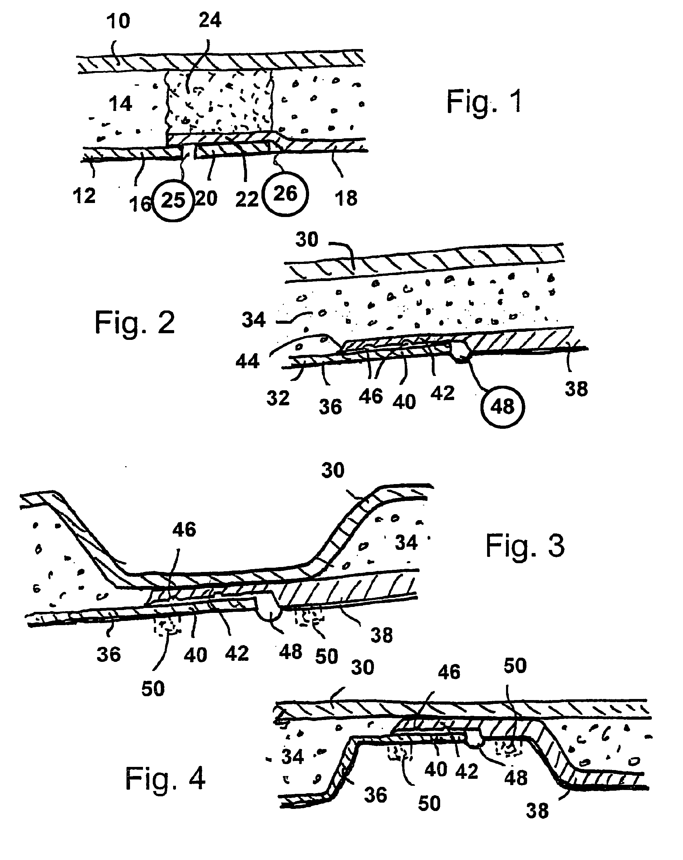

Die Figur 1 zeigt in einer Schnittansicht einen Zustand eines erfindungsgemäßen Herstellungsverfahrens vor dem Entformen.

Ein Bauteil, hier ein Innenverkleidungsteil, mit einem starren Träger 10 und einer Haut 12 verbunden mit einer Schaumschicht 14 befindet sich in einer Werkzeugform (nicht dargestellt). Die Haut weist zwei Teile 16 und 18 auf, wobei das Teil 16 einen außen liegenden Endbereich 20 und das Teil 18 einen innen liegenden Endbereich 22 bildet, und die beiden Endbereiche sich überlappen.

Damit der während der Herstellung des Teils zwischen Träger und Haut beaufschlagte Schaum nicht die Möglichkeit hat, während des Schäumprozesses zwischen die Endbereiche 20 und 22 einzudringen, ist erfindungsgemäß ein Element 24, hier aus Schaum, mit offener Porosität ausschließlich zwischen den Träger und den Endbereichen 20 und 22 angeordnet und hält diese in Kontakt. Damit der Schaum 14 später ausgebildet werden kann, hat der Schaum des Elements 24 eine offene Porosität, welche den Durchtritt der Mischung, aus welcher der Schaum gebildet wird, erlaubt, während sie in einem flüssigen Zustand ist. Das Element 24 erstreckt sich praktisch durchgängig über den gesamten Verlauf der Überlappung der Endbereiche.

Die zwei Teile der Haut 16 und 18 sind hier aus dem gleichen Material mit vergleichbaren Dicken, aber mit unterschiedlichen Farbeigenschaften, gebildet. Auf diese Weise erscheint an dem Rand 26 des Teils 16, welcher beim fertig gestellten Teil sichtbar ist, ein Farbübergang.

Selbstverständlich können die beiden Bauteile 16 und 18 andere unterschiedliche Eigenschaften aufweisen, beispielsweise bezüglich der Dicke, der Steifigkeit, der Textur, der Natur des Materials und der Körnigkeit oder Rauhigkeit.

Alternativ kann anstatt eines Elementes 24 aus Schaum beispielsweise auch ein Element aus einem Gewebe, einem Gewirke oder einem Vlies eingesetzt werden, welches ebenfalls eine ausreichende Porosität für den Schaumdurchtritt der Schaummischung aufweist.

Der wesentliche Punkt der Erfindung in dieser Ausführungsform ist, dass das Element 24 die beiden Endbereiche 20 und 22 in gegenseitigem Kontakt hält. Das Element 24 kann relativ steif oder weich, insbesondere elastisch, sein. Ein wichtiger Punkt ist, dass die offene Porosität des Elements 24 ausreichend ist, damit der beaufschlagte Schaum der Zwischenschicht von einer Seite zur anderen Seite durch das Element 24 hindurchtreten kann.

Des Weiteren weist der außen liegende Endbereich 20 des Hautteils 16 im Bereich, der dem innen liegenden Endbereich 22 gegenüberliegt, durchgehende Öffnungen 25 auf. Diese Öffnungen sind gleichmäßig entlang des gesamten Verlaufs des Überlappungsbereiches der beiden Endbereiche der Hautteile verteilt.

An diese Öffnungen 25 wird während des Schäumprozesses ein Unterdruck angelegt (beispielsweise über in der ersten Werkzeughälfte vorgesehene Kanäle), wodurch der innen liegende Endbereich und der außen liegende Endbereich gemeinsam gegen die Oberfläche der ersten Werkzeughälfte gepresst werden.

Derartige Öffnungen 25 bieten sich an, wenn die durch das Element 24 erzeugte Dichtwirkung zusätzlich verstärkt werden soll. Solche Öffnungen müssen aber nicht zwingend notwendig sein.

Figur 2 stellt eine andere Ausführungsform des erfindungsgemäßen Verfahrens dar. In diesem Fall ist ein steifer Träger 30 von einer Haut 32 durch eine Schaumschicht 34 getrennt. Die Haut 32 enthält einen ersten Teil 36, welcher einen außen liegenden Endbereich 40 bildet, und einen zweites Teil 38, welcher einen innen liegenden Endbereich 42 bildet.

Erfindungsgemäß wird der Zusammenhalt der beiden Endbereiche während des Schäumprozesses durch die Bildung einer Dichtung gesichert, wobei die Dichtung durch eine Dichtlippe 44 am Rand des Endbereichs 42 des innen liegenden Teils 38 gebildet wird.

An der Fläche sind zumindest eines des außen liegenden oder innen liegenden Endbereichs Aussparungen 46 vorgesehen, um Schaum aufzunehmen, welcher die Dichtlippe 44 passieren könnte.

Ein Kanal 48, welcher durch eine Rille in der Oberfläche der ersten Werkzeughälfte gebildet wird, ist dafür vorgesehen, einen Unterdruck zu übertragen, welcher, wenn während des Schritts der Beaufschlagung des Schaums ausgeübt, das Halten der Hautteile an die benachbarten Oberfläche des Werkzeugs sichert.

In der gezeigten Ausführung hat das erste Hautteil 36 eine konstante Dicke, das zweite Hautteil 38 aber, gebildet aus Plastik, hat ein Profil, welches zugleich die Dichtlippe, die Aufnahmen für Schaum und einen Spalt, der die Anwendung von Unterdruck erleichtert, ausbildet.

Die Figuren 3 und 4, bei welchen die zur Figur 3 identischen Bezugszeichen gleiche Elemente benennen, zeigen zwei Varianten des erfindungsgemäßen Verfahrens, gemäß dem die Wirkung der Dichtung ergänzt wird durch einen Kontakt zwischen dem innen liegenden Endbereich der Haut und dem Träger 30. Es ist deutlich erkennbar, dass unter diesen Bedingungen das Auftreten von für Schaum undichte Stellen zwischen den beiden Endbereichen der Haut sehr unwahrscheinlich ist.

In den Ausführungsvarianten der Figuren 3 und 4 kann die Oberfläche der Werkzeugform aufblasbare Dichtungen 50 enthalten, welche es ermöglichen, die Teile der Haut gegen den Träger 30 zu drücken um einen guten Halt der Endbereiche zu gewährleisten.

Obwohl über eine Dichtlippe für den Zusammenhalt der Endbereiche der Haut hinaus die Verwendung zugleich von Schaumaufnahmen, eines Kanals für die Anwendung eines Unterdrucks und von aufblasbaren Dichtungen beschrieben wurde, können diese Vorrichtungen bzw. Elemente auch getrennt voneinander eingesetzt werden.

Des Weiteren können auch Öffnungen in dem außen liegenden Endbereich für das Anlagen eines Unterdrucks, wie im ersten Ausführungsbeispiel beschrieben und in Figur 1 gezeigt, für die beschriebenen anderen Ausführungsbeispiele zusätzlich eingesetzt werden.

Der wesentliche Punkt der Erfindung ist, dass die Endbereiche der zwei Teile der Haut praktisch durchgängig über ihre ganze Länge gehalten werden, so dass sich keine bevorzugte Austrittsstelle für das Austreten von Schaum während des Schritts des Beaufschlagens des Schaums ausbilden kann.

## Patentansprüche

1. Verfahren zur Herstellung eines Innenverkleidungsteils für Automobile, das eine Haut (12; 32), die von einem starren Träger (10; 30) mit einer Zwischenlage (14; 34) aus Schaum getragen wird, enthält, wobei die Haut zumindest zwei Teile (16, 18; 36, 38) aufweist, die durch ununterbrochene Überlappung ihrer Endbereiche (20, 22; 40, 42) miteinander verbunden sind, und wobei das Verfahren die Schritte enthält:
Anordnen der Haut (12; 32) in einer ersten Werkzeughälfte derart, dass der Endbereich (20; 40) des außen liegenden Teils der Haut (16; 36) in ununterbrochenem Kontakt mit der Oberfläche der ersten Werkzeughälfte ist,
Anordnen des Trägers (10; 30) in einer zweiten Werkzeughälfte,
Schließen der ersten und zweiten Werkzeughälfte, und
Einbringen einer Mischung zum Bilden eines Schaums zwischen die Haut (12; 32) und den Träger (10; 30), und Ausbilden der Zwischenlage aus Schaum,
wobei der Endbereich (20; 40) des außen liegenden Teils (16; 36) der Haut in ununterbrochenem Kontakt mit dem Endbereich (22; 42) des innen liegenden Teils (18; 38) der Haut gehalten wird,
**dadurch gekennzeichnet,**
**dass** das Halten der Endbereiche (20, 22) in einem ununterbrochenen Kontakt das Einsetzen eines Elements (24) aus Schaum über die ganze Länge der sich überlappenden Endbereiche zwischen den Träger (10) und den Endbereich (22) des innen liegenden Teils (18) enthält, wobei das Element (24) eine offene Porosität der Art aufweist, dass die für die Bildung der Zwischenlage (14) aus Schaum eingeführte Mischung durch das Element (24) hindurchtreten kann oder
**dass** das Halten der Endbereiche (40, 42) in ununterbrochenem Kontakt am Rand des Endbereichs (42) des innen liegenden Teils (38) die Bildung einer Dichtung (44) aufweist, welche den Durchtritt der Mischung verhindert, und der Art ist, dass der Endbereich (42) des innen liegenden Teils (38) der Haut von dem beaufschlagten Schaum gehalten wird, wobei das Halten der Endbereiche (40, 42) im ununterbrochenen Kontakt die Ausübung eines Unterdrucks benachbart zum Rand des Endbereichs (40) des außen liegenden Teils (36) enthält, um den Endbereich (42) des innen liegenden Teils (38) gegen den Endbereich (40) des außen liegenden Teils (36) zu pressen oder
**dass** das Halten der Endbereiche (40, 42) in ununterbrochenem Kontakt das Inkontaktbringen des Endbereichs (42) des innen liegenden Teils (38) mit dem Träger (30) enthält, wobei der Träger ununterbrochenen einer Oberfläche entlang des Endbereichs (42) des innen liegenden Teils (38) folgt, wobei zumindest einer der Endbereiche (40, 42) in seinem dem anderen Endbereich gegenüber liegenden Bereich zumindest eine Aussparung (46) aufweist, wobei die Aussparung (46) eine Aufnahme für den beaufschlagten Schaum, welcher zwischen die beiden Endbereiche (40, 42) eindringen könnte, bildet.

2. Verfahren nach Anspruch 1, **dadurch gekennzeichnet, dass** die Dichtung (44) eine Dichtlippe ist, welche entlang des Randes des Endbereichs (42) des innen liegenden Teils (38) verläuft.

3. Verfahren nach einem der Ansprüche 1 oder 2, **dadurch gekennzeichnet, dass** zumindest einer der Endbereiche (40, 42) in seinem dem anderen Endbereich gegenüber liegenden Bereich zumindest eine Aussparung (46) aufweist, wobei die Aussparung (46) eine Aufnahme für den beaufschlagten Schaum, welcher zwischen die beiden Endbereiche (40, 42) eindringen könnte, bildet.

4. Verfahren nach Anspruch 1, **dadurch gekennzeichnet, dass** das Halten der Endbereiche (40, 42) im ununterbrochenen Kontakt die Ausübung eines Unterdrucks benachbart zum Rand des Endbereichs (40) des außen liegenden Teils (36) enthält, um den Endbereich (42) des innen liegenden Teils (38) gegen den Endbereich (40) des außen liegenden Teils (36) zu pressen.

5. Verfahren nach einem der Ansprüche 1 bis 4, **dadurch gekennzeichnet, dass** das Halten der Endbereiche (40, 42) in praktisch ununterbrochenem Kontakt das Aufblasen einer Dichtung (50) gegen den Endbereich (40) des außen liegenden Teils (36) der Haut an den Träger (30) enthält.

6. Verfahren nach einem der vorhergehenden Ansprüche, **dadurch gekennzeichnet, dass** durch Anlegen von Unterdruck an durchgehende Öffnungen (25) des Endbereichs (20) des außen liegenden Teils (16) in seinem Bereich, der dem Endbereich (22) des innen liegenden Teils 18) gegenüberliegt, der Endbereich (22) des innen liegenden Teils (18) und der Endbereich (20) des außen liegenden Teils (16) gemeinsam gegen die Oberfläche der ersten Werkzeughälfte gepresst werden.

7. Verfahren nach einem der vorhergehenden Ansprüche, **dadurch gekennzeichnet, dass** es die Verwendung von Hautteilen (16, 18; 36, 38) mit unterschiedlichen Eigenschaften, wie Farbe, Dicke, Steifheit, Textur, Natur des Materials und Körnigkeit, enthält.

8. Bauteil, insbesondere Innenverkleidungsteil für ein Automobil das eine Haut (12), die von einem starren Träger (10) über eine Zwischenlage aus Schaum (14) getragen wird, enthält, wobei die Haut zumindest zwei Teile (16, 18) aufweist, die durch ununterbrochene Überlappung ihrer Endbereiche (20, 22) miteinander verbunden sind, **dadurch gekennzeichnet, dass** es zwischen dem Endbereich (22) des innen liegenden Teils (18) und dem Träger (10) ein Element (24) mit einer offenen Porosität, welches in seinen Poren den Schaum der Zwischenlage enthält, aufweist.

9. Bauteil nach Anspruch 8, **dadurch gekennzeichnet, dass** das Element ausschließlich zwischen den sich überlappenden Endbereichen (20, 22) der Hautteile und dem Trägers (10) angeordnet ist.

10. Bauteil nach einem der Ansprüche 8 oder 9, **dadurch gekennzeichnet, dass** das Element (24) mit offener Porosität aus einem Schaum, aus einem Gewebe, einem Gewirke oder einem Vlies besteht.

## Claims

1. A method for manufacturing an inner trim part for automobiles, which comprises a skin (12; 32) which is carried by a rigid carrier (10; 30) with an intermediate layer (14; 34) of foam, wherein the skin comprises at least two parts (16, 18; 36, 38) which are connected to one another by way of an uninterrupted overlapping of their end regions (20, 22; 40, 42) and wherein the method comprises the steps:
arranging the skin (12; 32) in a first tool half in a manner such that the end region (20; 40) of the outer-lying part of the skin (16; 36) is in uninterrupted contact with the surface of the first tool half,
arranging the carrier (10; 30) in a second tool half,
closing the first and second tool halves,
and
introducing a mixture for forming a foam between the skin (12; 32) and the carrier (10; 30), and forming the intermediate layer of foam,
wherein the end region (20; 40) of the outer-lying part (16; 36) of the skin is in uninterrupted contact with the end region (22; 42) of the inner-lying part (18; 38) of the skin,
**characterised in that**
the holding of the end regions (20, 22) in an uninterrupted contact comprises the application of an element (24) of foam over the complete length of the overlapping edge regions between the carrier (10) and the end region (22) of the inner-lying part (18), wherein the element (24) has an open porosity of the nature such that the mixture introduced for the formation of the intermediate layer (14) of foam can enter through the element (24) or
that the holding of the end regions (40, 42) in uninterrupted contact at the edge of the end region (42) of the inner-lying part (38) comprises the formation of a seal (44) which prevents the passage of the mixture and is of a nature such that the end region (42) of the inner-lying part (38) of the skin is held by the impinging foam, wherein the holding of the end regions (40, 42) in uninterrupted contact comprises the exertion of a vacuum adjacent to the edge of the end region (40) of the outer-tying part (36), in order to press the end region (42) of the inner-lying part (36) against the end region (40) of the outer-lying part (36), or
that the holding of the end regions (40, 42) in uninterrupted contact comprises the bringing of the end region (42) of the inner-lying part (38) into contact with the carrier (30), wherein the carrier follows a surface along the end region (42) of the inner-lying part (38) in an uninterrupted manner, wherein at least one of the end regions (40, 42) in its region lying opposite the other end region comprises at least one recess (46),
wherein the recess (46) forms a receiver for the impinged foam which could penetrate between the two end regions (40, 42).

2. A method according to claim 1, **characterised in that** the seal (44) is a sealing lip which runs along the edge of the end region (42) of the inner-lying part (38).

3. A method according to one of the claims 1 or 2, **characterised in that** at least one of the end regions (40, 42) in its region lying opposite the other end region comprises at least one recess (46), wherein the recess (46) forms a receiver for the impinging foam which could penetrate between the two end regions (40, 42).

4. A method according to claim 1, **characterised in that** the holding of the end regions (40, 42) in uninterrupted contact comprises the application of a vacuum adjacent to the edge of the end region (40) of the outer-lying part (36), in order to press the end region (42) of the inner-lying part (38) against the end region (40) of the outer-lying part (36).

5. A method according to one of the claims 1 to 4, **characterised in that** the holding of the end regions (40, 42) in a practically uninterrupted contact comprises the inflation of a seal (50) against the end region (40) of the outer-lying part (36) of the skin, onto the carrier (30)

6. A method according to one of the preceding claims, **characterised in that** by way of applying a vacuum onto continuous openings (25) of the end region (20) of the outer-lying part (16) in its region which lies opposite the end region (22) of the inner-lying part (18), the end region (22) of the inner-lying part (18) and the end region (20) of the outer-lying part (16) are pressed together against the surface of the first tool half.

7. A method according to one of the preceding claims, **characterised in that** it comprises the use of skin parts (16; 18; 36, 38) with different characteristics such as colour, thickness, stiffness texture, nature of the material and granularity.

8. A component, in particular inner trim part for an automobile which comprises a skin (12) which is carried by a rigid carrier (10) via an intermediate layer of foam, wherein the skin comprises at least two parts (16, 18) which are connected to one another by way of an uninterrupted overlapping of their end regions (20, 22), **characterised in that** between the end region (22) of the inner-lying part (18) and the carrier (10), it comprises an element (24) with an open porosity and containing the foam of the intermediate layer in its pores.

9. A component according to claim 8, **characterised in that** the element is arranged exclusively between the overlapping end regions (20, 22) of the skin parts and the carrier (10).

10. A component according to one of the claims 8 or 9, **characterised in that** the element (24) with an open porosity consists of a foam, of a woven fabric, of a knitted fabric, or of a non-woven.

## Revendications

1. Procédé pour la fabrication d'une pièce de garniture intérieure pour automobiles, comprenant une membrane (12 ; 32) portée par un support rigide (10; 30) moyennant une couche intermédiaire (14; 34) en mousse, la membrane comportant au moins deux parties (16, 18 ; 36, 38) reliées entre elles par superposition continue de leurs régions terminales (20, 22 ; 40, 42), et le procédé comprenant les étapes suivantes :
- disposition de la membrane (12 ; 32) dans une première moitié d'outil, de manière à ce que la région terminale (20; 40) de la partie extérieure de la membrane (16 ; 36) se trouve en contact continu avec la surface de la première moitié d'outil,
- disposition du support (10 ; 30) dans une deuxième moitié d'outil,
- fermeture de la première et de la deuxième moitié d'outil, et
- introduction d'un mélange pour la formation d'une mousse entre la membrane (12 ; 32) et le support (10 ; 30), et formation de la couche intermédiaire en mousse,
- la région terminale (20 ; 40) de la partie extérieure (16 ; 36) de la membrane étant maintenue en contact continu avec la région terminale (22 ; 42) de la partie intérieure (18 ; 38) de la membrane,
**caractérisé en ce que**
- le maintien des régions terminales (20, 22) en contact continu comprend l'insertion d'un élément (24) en mousse, sur toute la longueur des régions terminales superposées, entre le support (10) et la région terminale (22) de la partie intérieure (18), l'élément (24) présentant une porosité ouverte permettant au mélange introduit pour la formation de la couche intermédiaire (14) en mousse de traverser l'élément (24), ou
- le maintien des régions terminales (40, 42) en contact continu sur le bord de la région terminale (42) de la partie intérieure (38) comprend la formation d'un joint d'étanchéité (44) empêchant le passage du mélange, de sorte que la région terminale (42) de la partie intérieure (38) de la membrane est maintenue par la mousse alimentée, le maintien des régions terminales (40, 42) en contact continu comprenant l'application d'une sous-pression à proximité du bord de la région terminale (40) de la partie extérieure (36), pour comprimer la région terminale (42) de la partie intérieure (38) contre la région terminale (40) de la partie extérieure (36), ou
- le maintien des régions terminales (40, 42) en contact continu comprend la mise en contact de la région terminale (42) de la partie intérieure (38) avec le support (30), le support suivant continuellement une surface le long de la région terminale (42) de la partie intérieure (38), au moins l'une des régions terminales (40, 42) comportant au moins un évidement (46) dans sa région opposée à l'autre région terminale, l'évidement (46) formant une admission pour la mousse alimentée susceptible de s'introduire entre les deux régions terminales (40, 42).

2. Procédé selon la revendication 1, **caractérisé en ce que** le joint d'étanchéité (44) est une lèvre d'étanchéité s'étendant le long du bord de la région terminale (42) de la partie intérieure (38).

3. Procédé selon l'une des revendications 1 ou 2, **caractérisé en ce que** l'au moins une des régions terminales (40, 42) comporte au moins un évidement (46) dans sa région opposée à l'autre région terminale, l'évidement (46) formant une admission pour la mousse alimentée susceptible de s'introduire entre les deux régions terminales (40, 42).

4. Procédé selon la revendication 1, **caractérisé en ce que** le maintien des régions terminales (40, 42) en contact continu comprend l'application d'une sous-pression à proximité du bord de la région terminale (40) de la partie extérieure (36), pour comprimer la région terminale (42) de la partie intérieure (38) contre la région terminale (40) de la partie extérieure (36).

5. Procédé selon l'une des revendications 1 à 4, **caractérisé en ce que** le maintien des régions terminales (40, 42) en contact pratiquement continu comprend le gonflement d'un joint d'étanchéité (50) contre la région terminale (40) de la partie extérieure (36) de la membrane sur le support (30).

6. Procédé selon l'une des revendications précédentes, **caractérisé en ce que** par l'application d'une sous-pression sur des ouvertures traversantes (25) de la région terminale (20) de la partie extérieure (16) dans sa région opposée à la région terminale (22) de la partie intérieure (18), la région terminale (22) de la partie intérieure (18) et la région terminale (20) de la partie extérieure (16) sont comprimées ensemble contre la surface de la première moitié d'outil.

7. Procédé selon l'une des revendications précédentes, **caractérisé en ce qu'**il comprend l'utilisation de parties de membrane (16, 18; 36, 38) avec des propriétés différentes, telles que la couleur, l'épaisseur, la rigidité, la texture, la nature du matériau et le grain.

8. Pièce de construction, en particulier une pièce de garniture intérieure pour un véhicule automobile, comprenant une membrane (12) portée par un support rigide (10 ; 30) avec une couche intermédiaire en mousse (14), la membrane comportant au moins deux parties (16, 18) reliées entre elles par superposition continue de leurs régions terminales (20, 22), **caractérisée en ce qu'**elle comporte, entre la région terminale (22) de la partie intérieure (18) et le support (10), un élément (24) avec une porosité ouverte, contenant la mousse de la couche intermédiaire dans ses pores.

9. Pièce de construction selon la revendication 8, **caractérisée en ce que** l'élément est agencé exclusivement entre les régions terminales (20, 22) superposées des parties de membrane et le support (10).

10. Pièce de construction selon l'une des revendications 8 ou 9, **caractérisée en ce que** l'élément (24) à porosité ouverte est constitué d'une mousse, d'une toile, d'un tricot ou d'un non-tissé.
